Europäisches Patentamt

European Patent Office

Office européen des brevets

Veröffentlichungsnummer: **0 282 910**
**A2**

# EUROPÄISCHE PATENTANMELDUNG

Anmeldenummer: 88103787.3

Anmeldetag: 10.03.88

Int. Cl.⁴: **C08G 14/08** , C08L 97/02 ,
//(C08L97/02,61:34)

Priorität: 18.03.87 DE 3708739

Veröffentlichungstag der Anmeldung:
21.09.88 Patentblatt 88/38

Benannte Vertragsstaaten:
AT BE CH DE FR GB IT LI NL SE

Anmelder: **BASF Aktiengesellschaft**
**Carl-Bosch-Strasse 38**
**D-6700 Ludwigshafen(DE)**

Erfinder: **Matthias, Guenther, Dr.**
**Meergartenweg 25 a**
**D-6710 Frankenthal(DE)**
Erfinder: **Schatz, Hermann**
**Neubergstrasse 50**
**D-6730 Neustadt(DE)**
Erfinder: **Wittmann, Otto**
**Max-Beckmann-Strasse 13 b**
**D-6710 Frankenthal(DE)**
Erfinder: **Diem, Hans, Dr.**
**Kniebisstrasse 16**
**D-6800 Mannheim 1(DE)**

**Alkalisch kondensierte Harnstoff-Phenol-Formaldehyd-Harzlösung, Verfahren zu ihrer Herstellung und ihre Verwendung bei der Herstellung von Spanplatten.**

Es wird eine alkalisch kondensierte Harnstoff-Phenol-Formaldehyd-Harzlösung mit einem Trockengehalt von 38 bis 60 Gew.% vorgeschlagen, welche eine verbesserte Lagerstabilität aufweist. Diese Harzlösung ist dadurch gekennzeichnet, daß sie

(a) Sulfit und/oder Hydroxymethansulfinat in einer Konzentration von 0,2 bis 3 Gew.%, berechnet als $SO_3^{2-}$ oder Sulfinsäurerest, und

(b) Dimethylolharnstoff und/oder Trimethylolharnstoff in einer Konzentration von 0 bis 5 Gew.%, jeweils bezogen auf das Gesamtgewicht der Harzlösung, enthält.

EP 0 282 910 A2

## Alkalisch kondensierte Harnstoff-Phenol-Formaldehyd-Harzlösung, Verfahren zu ihrer Herstellung und ihre Verwendung bei der Herstellung von Spanplatten

Die Erfindung betrifft eine alkalisch kondensierte Harnstoff-Phenol-Formaldehyde-Harzlösung mit verbesserter Lagerstabilität, ein Verfahren zu ihrer Herstellung und ihre Verwendung bei der Herstellung von formaldehydarmen, wetterfesten Spanplatten.

Harnstoff-Phenol-Formaldehyd-Leimharze sind seit langem bekannt.

Die Nachteile dieser Harze bestehen in der relativ kurzen Lagerbarkeit. Die Lagerbarkeit ist außerordentlich wichtig. Denn Harze zur Verleimung sollen im eigentlichen Verleimungsprozeß - schnell aushärten, aber beim Transport und bei der Lagerung im Vorratsbehälter möglichst lange Zeit flüssig bleiben. Das ist besonders deswegen ein Problem, weil die Harze oligomer hergestellt und in der Endverarbeitung zu Polymeren gehärtet werden. Die Oligomeren dürfen also bei Umgebungstemperatur von im Sommer bis zu 25 oder 30°C sehr lange Zeit nicht reagieren, sollen sich aber bei der Verarbeitung bei einer Preßtemperatur von 170 bis 220°C schnell und vollständig umsetzen.

In der EP-A-69 267 ist die Herstellung von Harnstoff-Melamin-Phenol-Formaldehyd-Harzen beschrieben, welche sulfitmodifiziert sind. Hierbei wird zuerst ein sulfitmodifiziertes Phenol-Formaldehydharz hergestellt und dieses dann mit Harnstoff-Formaldehydharz und Melamin, sowie Formaldehyd umgesetzt. Hierdurch wird das Harz wasserdispergierbar und man erhält eine verbesserte Lagerstabilität. Beim Versuch, dieses Verfahren auf die Herstellung lagerstabiler Harnstoff-Phenol-Formaldehyd-Harze zu übertragen, stellt man jedoch fest, daß eine verbesserte Lagerstabilität nicht erreicht wird.

In der US-A-2 863 842 sind sulfitmodifizierte Melamin-Formaldehyd-Lösungen beschrieben, bei denen das Sulfit die Funktion einer erhöhten Wasserdispergierbarkeit und Viskositätsabsenkung erfüllen soll.

In der US-A-2 870 041 wird die Beseitigung von Gerüchen aus Harzen für Textilen oder bei mit Harzen behandelten Textilien durch Sulfitmodifizierung beschrieben. Die Ursache des Geruchs sind Aldehyde, beispielsweise Formaldehyd, oder Amine. Das Sulfit reagiert beispielsweise mit dem Formaldehyd unter Bildung eines geruchlosen Formaldehyd-Additionsproduktes.

Die US-A-3 108 990 betrifft die Stabilisierung von Phenol-Formaldehyd-Harzen durch Zugabe eines Antioxidationsmittels, beispielsweise Natriumsulfit, oder anderer schwefelhaltiger Verbindungen, welche im Harz zur Bildung von Natriumsulfit führen.

Die DE-A-3 346 153 beschreibt die Herstellung alkaliarmer, üblicher Harnstoff-Phenol-Formaldehyd-Harzbindemittel, welche eine erhöhte Lagerstabilität aufweisen sollen. Hierzu versetzt man Phenol-Formaldehyd-Harze üblicher Viskosität mit Harnstoff. Es wird behauptet, daß sich der Harnstoff mit Formaldehyd unter Bildung von Methylolharnstoff umsetze, was zur geltend gemachten Lagerbarkeitsverbesserung führe.

Wenn man aber die Lehre dieser Druckschrift nacharbeitet, ergeben sich jedoch ganz andere Verhältnisse. Das Harz der ersten Stufe der DE-A-3 346 153 enthält 3,6 % Formaldehyd (Beispiel 1), entsprechend einem Gehalt von 0,12 Mol. Dem entspräche bei entsprechender Reaktion mit Harnstoff ein Gehalt von 7,2 % Dimethylolharnstoff oder 10,8 % Monomethylolharnstoff. Im Gegensatz zur geltend gemachten Lagerbarkeit wurde jedoch festgestellt, daß man bereits bei einem Zusatz von 2,5 % Dimethylolharnstoff eine Verringerung der Lagerbarkeit und bei 5 % bereits einen drastischen Effekt erzielt. Es ist daher davon auszugehen, daß sich bei der Lehre der DE-A-3 346 153 kein Di- oder Trimethylolharnstoff bildet. Das wird gestützt durch die entsprechende Fachliteratur, vgl. Kumlin und Simonson, Die Angewandte Makromolekulare Chemie, 93 (1981), Seite 37, ibd, 96 (1980), Seiten 150, 151 und ibd 72 (1978), Seiten 68 und 69. Aus der an zweiter Stelle genannten Literaturstelle geht auch hervor, daß die Reaktionsgeschwindigkeit bei 70°C und auch darüber in der Größenordnung von 50 Minuten bis zu einem Gleichgewichtsumsatz liegt. Die Molverhältnisse von Harnstoff zu Formaldehyd in den genannten Literaturstellen liegen bei 1:1,4 und höher. In der DE-A-3 346 153 liegt ein Molverhältnis Harnstoff zu Formaldehyd von 1:0,57 vor, d.h. das Verhältnis ist um den Faktor 2,5 kleiner als bei Kumlin und Simonson.

Der Erfindung liegt die Aufgabe zugrunde, eine alkalisch kondensierte Harnstoff-Phenol-Formaldehyd-Harzlösung mit einem Trockengehalt von 38 bis 60 Gew.%, vorzugsweise 42 bis 58 Gew.%, bereitzustellen, welche eine verbesserte Lagerfähigkeit aufweist. Es soll auch ein Verfahren zur Herstellung der Harzlösung bereitgestellt werden.

Diese Aufgabe wird gelöst mit einer alkalisch kondensierten Harnstoff-Phenol-Formaldehyd-Harzlösung der genannten Art, die dadurch gekennzeichnet ist, daß sie

(a) Sulfit und/oder Hydroxymethansulfinat in einer Konzentration von 0,2 bis 3 Gew.%, berechnet als $SO_3^{2-}$ oder Sulfinsäurerest, und

(b) Dimethylolharnstoff und/oder Trimethylolharnstoff in einer Konzentration von 0 bis 5 Gew.%, jeweils bezogen auf das Gesamtgewicht der Harzlösung, enthält.

Nach einer bevorzugten Ausführungsform ist die Harzlösung dadurch gekennzeichnet, daß sie Sulfit und Dimethylolharnstoff in Kombination enthält.

Nach einer weiteren bevorzugten Ausführungsform enthält die erfindungsgemäße Harzlösung Sulfit-und/oder Hydroxymethansulfinat in einer Konzentration von 0,3 bis 1,5, insbesondere 0,5 bis 0,8 Gew.% und/oder Dimethylolharnstoff und/oder Trimethylolharnstoff in einer Konzentration von 2 bis 4 Gew.%, insbesondere 2 bis 3 Gew.%, jeweils bezogen auf das Gesamtgewicht der Harzlösung.

Bevorzugt handelt es sich beim Dimethylolharnstoff um ein technisches Produkt, das auch Anteile von Monomethylolharnstoff und Trimethylolharnstoff, sowie gegebenenfalls oligomere Verbindungen enthält.

Nach einer weiteren bevorzugten Ausgestaltung der Erfindung enthält die Harnstoff-Phenol-Formaldehyd-Harzlösung Zusätze von Melamin-Formaldehyd-Harzen, Melamin-Harnstoff-Formaldehyd-Harzen, Harnstoff-Formaldehyd-Harzen, Resorcin-Formaldehyd-Harzen oder Resorcin-Harnstoff-Formaldehyd-Harzen, zweckmäßig in einer Menge von 1 bis 20 Gew.%, bevorzugt 2,5 bis 10 Gew.%, bezogen auf das Gesamtgewicht der Harzlösung. Die Harzkomponenten der erfindungsgemäßen Harzlösung können ganz oder teilweise verethert sein, beispielsweise mit Methanol oder Glykolen.

Das erfindungsgemäße Verfahren zur Herstellung der alkalisch kondensierten Harnstoff-Phenol-Formaldehyd-Harzlösung ist dadurch gekennzeichnet, daß man zuerst eine Harnstoff-Phenol-Formaldehyd-Harzlösung herstellt und anschließend mindestens einen der Bestandteile Sulfit, Hydroxymethansulfinat, Dimethylolharnstoff und Trimethylolharnstoff einzeln oder im Gemisch, oder nach Einkondensation in ein Phenol-Formaldehydkondensat oder Harnstoff-Phenol-Formaldehydkondensat, zur Harzlösung zugibt, sowie gegebenenfalls die anderen Harz-Zusätze zufügt.

Gegenstand der Erfindung ist auch die Verwendung der alkalisch kondensierten Harnstoff-Phenol-Formaldehyd-Harzlösung bei der Herstellung von formaldehydarmen, wetterfesten Spanplatten. Die Verwendung kann bei einschichtig oder mehrschichtig verleimten Spanplatten erfolgen, wobei man in Mittelschichten auch gewünschtenfalls Anteile an oligomerem Diphenylmethan-4,4'-diisocyanat einsetzen kann.

Erfindungsgemäß wurde festgestellt, daß die Lagerfähigkeit der genannten Leimharzlösungen angehoben wurde, d.h. der Viskositätsanstieg pro Zeiteinheit ging zurück, wenn man das Harnstoff-Phenol-Formaldehyd-Harz mit einem Sulfit und/oder Hydroxymethansulfinat versetzt. Besonders günstig ist der Effekt in Kombination mit dem Zusatz an Dimethylolharnstoff. Hierbei erzielt man gleichzeitig noch eine Erhöhung der Reaktivität, ohne daß die Lagerfähigkeit zurückgehen muß. Durch passende Wahl des Anteils an Sulfit läßt sich trotz erhöhter Reaktivität die Lagerbarkeit auch zu Werten steuern, die in Abwesenheit von Dimethylolharnstoff, d.h. bei verringerter Reaktivität des Leimharzes, erzielt werden.

Die Erhöhung der Reaktivität beim erfindungsgemäßen Leimharz ist besonders wichtig bei der Verwendung als Mittelschichtharz, d.h. bei der Verleimung von Spanplatten, bei welcher in der Mittelschicht ein anderes Leimharz als in den Deckschichten eingesetzt wird. Bei den Mittelschichten steigt die Temperatur beim Pressen nicht so hoch an, wie bei den Deckschichten. Durch den erfindungsgemäßen Einsatz von Dimethylolharnstoff oder Trimethylolharnstoff im erfindungsgemäßen Leimharz wird eine Verkürzung der Preßzeit erzielt.

Das erfindungsgemäße alkalisch kondensierte Harnstoff-Phenol-Formaldehyd-Harz weist einen Trockengehalt von 40 bis 65 Gew.%, vorzugsweise 45 bis 60 Gew.%, insbesondere 50 bis 56 Gew.%, auf. Unter Trockengehalt wird hier der Rückstand verstanden, welcher nach dem Verdampfen des Wassers aus der Lösung bzw. des durch weitere Kondensation gebildeten Wassers zurückbleibt. Der Trockengehalt ist im Durchschnitt 8 bis 12 Gew.% geringer als der sogenannte Wertstoffgehalt, d.h. der Gehalt an Harzbildungskomponenten und Zuschlägen, abzüglich Wasser, die zur Herstellung der Leimharzlösung benötigt werden.

Im Falle einer Verwendung des erfindungsgemäßen Leimharzes als Mittelschichtharz kann der Alkaligehalt beispielsweise 6 bis 8 Gew.%, bezogen auf das Leimharz, betragen. Bei Verwendung als Deckschichtharz kann er beispielsweise zwischen 3 und 5 Gew.% ausmachen.

Das Molverhältnis Phenol:Formaldehyd:Harnstoff im erfindungsgemäßen Harz kann den Bereich 1:(1,5 bis 3,0):(0,3 bis 1,5) umfassen. Besonders bevorzugt sind molare Verhältnisse Phenol:Formaldehyd:Harnstoff von 1:(2 bis 2,7):(0,6 bis 1,3).

Der Sulfitzusatz erfolgt bevorzugt rein additiv. Eine Einkondensation oder die Zugabe eines Harzes, in das Sulfit mit einkondensiert wurde, zeigt im Vergleich zur additiven Zugabe von Sulfit eine geringere Verbesserung der Lagerbarkeit.

Ein solches Vorkondensat kann auch durch Einkondensation von Sulfit in Phenolformaldehyd erhalten werden. Dieses sulfithaltige Produkt kann anstelle des Sulfits zugemischt werden.

Erfindungsgemäß kommen eine ganze Reihe von Sulfiten einschließlich Hydrogensulfiten oder Hydroxymethansulfinaten in Betracht. Besonders bevorzugt sind Natriumsulfit, Natriumhydrogensulfit oder die entsprechenden Kalium-oder Kalziumsalze. Ferner ist bevorzugt das Natriumsalz der Hydroxymethansulfinsäure, auch als Natriumsulfoxilat (Umsetzungsprodukt von Formaldehyd mit Natriumdithionit = Rongalit) bezeichnet. Am zweckmäßigsten nimmt man Natriumsulfit, welches in wäßriger Lösung mit Natriumhydrogensulfit bekanntlich im Gleichgewicht steht.

Die Mengen an Sulfit können von 0,2 bis 3 Gew.%, berechnet als $SO_3^{2-}$, variieren. Die Gewichtsprozente beziehen sich auf das Gesamtgewicht der Flüssigharzlösung. Unterhalb der unteren Grenze wird die Wirkung bereits recht - schwach, oberhalb der Obergrenze von 3 Gew.% ergeben sich Nachteile, die in einer verstärkten Quellung der Spanplatte durch den hohen Salzgehalt bestehen. Bevorzugt ist ein Bereich von 0,3 bis 1,5 Gew.%, insbesondere von 0,6 bis 0,7 Gew.%.

Die Lagerstabilität, ausgedrückt als Zeit in Wochen, bis zur Erreichung einer Viskosität von ca. 1000 bis 1400 mPa.s, d.h. der Obergrenze der Verarbeitbarkeit, wird durch Natriumsulfit von etwa 4 bis 16 Wochen auf ungefähr 22 bis 33 Wochen erhöht. Diese Werte wurden bei etwa 25°C ermittelt. Im Vergleich hierzu besitzt ein Handelsprodukt, welches dem Harz gemäß der DE-A-3 346 153 entspricht, bei 25°C eine wesentlich geringere Lagerstabilität. Das Produkt weist am Anfang eine Viskosität von 200 mPa.s auf. Die Viskosität ist nach einer Woche auf 350 mPa.s angestiegen, nach zwei Wochen liegt sie bei 750 mPa.s. Nach 3 Wochen liegt der Wert jedoch bereits über 1000 mPa.s.

Als Methylolharnstoff setzt man zweckmäßig den N,N'-Dimethylolharnstoff ein. Monomethylolharnstoff alleine zeigt eine nur sehr geringe Anhebung der Reaktivität, weist aber den Nachteil der Lagerbarkeitsverringerung ebenso wie der positiv wirkende Dimethylolharnstoff auf. Auch Trimethylolharnstoff wirkt gut. Besonders bevorzugt ist die Verwendung von technischem Dimethylolharnstoff, welcher geringe Menge an Monomethylolharnstoff und Trimethylolharnstoff, sowie oligomere Verbindungen, enthalten kann. Der Zusatz an N,N'-Dimethylolharnstoff ist rein additiv, man kann jedoch nicht ausschließen, daß nach der Zumischung noch in kleinem Umfang eine Reaktion stattfindet.

Man setzt den Dimethylolharnstoff und/oder Trimethylolharnstoff in Mengen zwischen 0 und 5 Gew.%, insbesondere 1 und 5 Gew.%, ein. Ein bevorzugter Bereich liegt zwischen 2 und 4 Gew.%, optimale Ergebnisse werden bei einem Zusatz von 2 bis 3 Gew.% erzielt.

Der Dimethylolharnstoff und/oder Trimethylolharnstoff erhöht die Reaktivität. Diese kann als Gelierzeit oder besser als Preßzeit angegeben werden. Mit 2,1 Gew.% Dimethylolharnstoff wird die Preßzeit bei Spanplatten von 5,5 auf 5,0 min. gesenkt. Zwar erhöht sich die Formaldehydabspaltung, bleibt aber noch so tief, daß sie selbst den strengsten Anforderungen gerecht wird.

Man kann den Dimethylolharnstoff und/oder Trimethylolharnstoff als Pulver oder als wäßrige Lösung, beispielsweise in einer Konzentration von etwa 50 Gew.% zum Leimharz zugeben. Das Molverhältnis Dimethylolharnstoff zu freiem Formaldehyd kann beispielsweise zwischen 1:1,5 und 1:2,5 liegen.

Das Sulfit kann in fester oder in gelöster Form zugegeben werden.

Die Erfindung wird durch die nachstehenden Beispiele weiter erläutert. Darin beziehen sich Prozente und Teile, soweit nicht anders angegeben, auf das Gewicht.

Beispiel 1

Grundharz 1, alkalireich, Mittelschichtharz

In einer Rührapparatur wurden 940 Teile Phenol (10,0 Mol), 204 Teile Wasser und 225 Teile 50 %ige Natronlauge vorgelegt und bis 90°C aufgeheizt.

Innerhalb von 45 Minuten wurden 1 940 Teile 40 %ige Formaldehyd-Lösung (25,9 Mol) zudosiert. Hierbei stieg die Temperatur bis zum Sieden (102°C) an. Bei dieser Temperatur wurde das Reaktionsgemisch 10 Minuten gehalten. Anschließend wurde die Temperatur auf 85°C abgesenkt und bei dieser Temperatur kondensiert, bis 300 mPa.s erreicht sind. Dann wurden weitere 450 Teile 50 %ige Natronlauge hinzugefügt und bei 80°C auf eine Viskosität von 2500 mPa.s weiterkondensiert. Das so erhaltene Phenol-Formaldehyd-Harz wurde auf 40°C abgekühlt und mit 750 Teilen Harnstoff abgemischt, indem dieser darin aufgelöst wurde. Dabei fiel die Temperatur durch die Lösungsenthalpie auf ca. 25°C ab.

Das Leimharz hat folgende Eigenschaften:
Viskosität bei 20°C:      516 mPa.s
Dichte bei 20°C:      1.235 g/cm³
Trockengehalt:      51,9 %
Alkaligehalt als NaOH gerechnet:      6,2 %
Gelierzeit bei 100°C:      30 Minuten
Preßzeit 180°C,
18 mm Platte:      5,5 Minuten entspr. 18 s/mm Plattendicke
Lagerstabilität bei 25°C:      16 Wochen bis zur Erreichung von 1000 mPa.s

Diese relativ gute Lagerbarkeit ist auf den hohen Gehalt an Alkali zurückzuführen.

Beispiel 2

Grundharz 2, alkaliarm, Deckschichtharz

940 Teile Phenol (10 Mol), 900 Teile Wasser und 1500 Teile 40 %ige Formaldehyd-Lösung (20 Mol) wurden in einem Kolben vorgelegt. 280 Teile 50 %ige Natronlauge wurden innerhalb 30 Minuten so zudosiert, daß die Temperatur bis zum Sieden anstieg. Das Reaktionsgemisch wurde 30 Minuten am Sieden gehalten, anschließend auf 85°C abgekühlt und bei dieser Temperatur auf eine Viskosität von 2100 mPa.s kondensiert. Das so erhaltene Phenol-Formaldehyd-Harz wurde auf 40°C abgekühlt und mit 684 Teilen geprilltem Harnstoff abgemischt, indem dieser darin aufgelöst wurde. Aufgrund der Lösungsenthalpie des Harnstoffs fiel die Temperatur des Leimharzes auf ca. 25°C.

Das Leimharz hat folgende Eigenschaften:
Viskosität bei 20°C:     206 mPa.s
Dichte bei 210°C:     1,18 g/cm$^3$
Trockengehalt:     47,8 %
Alkaligehalt als NaOH gerechnet:     3,2 %
Gelierzeit bei 200°C:     18 Minuten
Preßzeit 180°C,
18 mm Platte:     5,5 Minuten entspr. 18 s/mm Plattendicke
Lagerstabilität bei 25°C:     4 Wochen bis zur Erreichung von 1400 mPa.s

Beispiel 3

Grundharz 1 mit Natriumsulfit

In 1 000 Teilen Grundharz 1 wurden 10 Teile Natriumsulfit aufgelöst. Dadurch entstand eine Harzlösung mit 1 Gew.% $Na_2SO_3$, entsprechend 0,63 Gew.% $SO_3^{2-}$.

Das so modifizierte Harz hat folgende Eigenschaften:

Die physikalischen Eigenschaften blieben bei dem relativ kleinen Zusatz praktisch unverändert:
Gelierzeit bei 100°C:     35 Minuten
Preßzeit bei 180°C, 18 mm Platte:     5,5 Minuten entspr. 18 s/mm
Alkali als NaOH gerechnet:     6,3 %
Lagerstabilität bei 25°C:     32 Wochen bis zur Erreichung von 1400 mPa.s; 22 Wochen bis zur Erreichung von 1000 mPa.s

Daraus ergibt sich, daß die Zeit der Lagerung bis zur Erreichung von 1 000 mPa.s von 16 Wochen auf 22 Wochen, also um 37 % angestiegen ist.

Beispiel 4

Grundharz 1 mit Dimethylolharnstoff und Natriumsulfit

In 1 175 Teilen Grundharz 1 wurden 25 Teile Dimethylolharnstoff und 10 Teile Natriumsulfit aufgelöst. Es entstand eine Harzlösung mit 0,83 % $Na_2SO_3$ oder 0,53 % $SO_3^{2-}$ und 2,1 % Dimethylolharnstoff.

Das so modifizierte Harz hat folgende Eigenschaften:
Viskosität bei 20°C:     482 mPa.s
Dichte bei 20°C:     1.246 g/cm$^3$
Trockengehalt:     54,0 %
Alkaligehalt als NaOH gerechnet:     6,3 %
Gelierzeit bei 100°C:     31 Minuten
Preßzeit 180°C, 18 mm Platte:     5,0 Minuten entspr. 16,6 s/mm
Lagerstabilität bei 25°C:     9 Wochen bis zur Erreichung von 1200 mPa.s

Die Reaktivität, ausgedrückt als Gelierzeit, ist verbessert. Die Preßzeit beträgt nur 5 Minuten. Durch Erhöhung des Sulfitzusatzes läßt sich die Lagerfähigkeit erhöhen.

Beispiel 5

Grundharz 2 gemäß Beispiel 2 mit Natriumsulfit

In 1 000 Teilen Grundharz 2 wurden 10 Teile Natriumsulfit aufgelöst. Dadurch entsteht eine Harzlösung mit 1 % $Na_2SO_3$ oder 0,63 % $SO_3^{2-}$.

Das so erhaltene Harz hat folgende Eigenschaften:

Die physikalischen Eigenschaften bleiben bei dem relativ kleinen Zusatz praktisch unverändert.
Alkaligehalt als NaOH gerechnet:     3,4 %
Gelierzeit bei 100°C:     22 Minuten
Lagerstabilität bei 25°C:     6 Wochen bis zur Erreichung von 1400 mPa.s

Daraus ergibt sich, daß die Zeit der Lagerung bis zur Erreichung von 1 400 mPa.s von 4 Wochen auf 6 Wochen, also um 50 % angestiegen ist.

**Ansprüche**

1. Alkalisch kondensierte Harnstoff-Phenol-Formaldehyd-Harzlösung mit einem Trockengehalt von 38 bis 60 Gew.%, insbesondere 42 bis 58 Gew.%, dadurch gekennzeichnet, daß sie

(a) Sulfit und/oder Hydroxymethansulfinat in einer Konzentration von 0,2 bis 3 Gew.%, berechnet als $SO_3^{2-}$ oder Sulfinsäurerest, und

(b) Dimethylolharnstoff und/oder Trimethylolharnstoff in einer Konzentration von 0 bis 5 Gew.%,

jeweils bezogen auf das Gesamtgewicht der Harzlösung, enthält.

2. Alkalisch kondensierte Harnstoff-Phenol-Formaldehyd-Harzlösung nach Anspruch 1, dadurch gekennzeichnet, daß sie Sulfit und Dimethylolharnstoff in Kombination enthält.

3. Alkalisch kondensierte Harnstoff-Phenol-Formaldehyd-Harzlösung nach Anspruch 1 oder 2, dadurch gekennzeichnet, daß sie Sulfit und/oder Hydroxymethansulfinat in einer Konzentration von 0,3 bis 1,5, insbesondere 0,5 bis 0,8 Gew.% und/oder Dimethylolharnstoff und/oder Trimethylolharnstoff in einer Konzentration von 2 bis 4 Gew.%, insbesondere 2 bis 3 Gew.%, jeweils bezogen auf das Gesamtgewicht der Harzlösung, enthält.

4. Alkalisch kondensierte Harnstoff-Phenol-Formaldehyd-Harzlösung nach einem der Ansprüche 1 bis 3, dadurch gekennzeichnet, daß es sich beim Dimethylolharnstoff um ein technisches Produkt handelt, das auch Anteile von Monomethylolharnstoff und Trimethylolharnstoff aufweist.

5. Alkalisch kondensierte Harnstoff-Phenol-Formaldehyd-Harzlösung nach einem der Ansprüche 1 bis 4, dadurch gekennzeichnet, daß es sich beim Sulfit um Natriumsulfit, Natriumhydrogensulfit, oder dessen Mischungen handelt.

6. Alkalisch kondensierte Harnstoff-Phenol-Formaldehyd-Harzlösung nach einem der Ansprüche 1 bis 5, dadurch gekennzeichnet, daß sie Zusätze von Melamin-Formaldehyd-Harzen, Melamin-Harnstoff-Formaldehyd-Harzen, Harnstoff-Formaldehydharzen, Resorcin-Formaldehyd-Harzen oder Resorcin-Harnstoff-Formaldehyd-Harzen aufweist.

7. Verfahren zur Herstellung der alkalisch kondensierten Harnstoff-Phenol-Formaldehyd-Harzlösung nach einem der Ansprüche 1 bis 6, dadurch gekennzeichnet, daß man zuerst eine Harnstoff-Phenol-Formaldehyd-Harzlösung herstellt und anschließend mindestens einen der Bestandteile Sulfit, Hydroxymethansulfinat, Dimethylolharnstoff und Trimethylolharnstoff einzeln oder im Gemisch, oder nach Einkondensation in ein Phenol-Formaldehydkondensat oder Harnstoff-Phenol-Formaldehydkondensat, zur Harzlösung zugibt, sowie gegebenenfalls die anderen Harz-Zusätze zufügt.

8. Verwendung der alkalisch kondensierten Harnstoff-Phenol-Formaldehyd-Harzlösung nach einem der Ansprüche 1 bis 6 und Anspruch 7 bei der Herstellung von formaldehydarmen, wetterfesten Spanplatten.